# EUROPÄISCHE PATENTANMELDUNG

(11) **EP 4 761 227 A1**
(43) Veröffentlichungstag der Anmeldung: **17.06.2026**
(21) Anmeldenummer: 25214288.0
(22) Anmeldetag: 07.11.2025
(51) Int. Cl.: H04N 1/10

(54) **DOKUMENTENSCANNER**

(30) Priorität: 12.12.2024 DE 102024137446
(71) Anmelder: DESKO GmbH, 95448 Bayreuth (DE)
(72) Erfinder: Wojciech, Bujak, 91257 Pegnitz (DE)
(74) Vertreter: Glück Kritzenberger Patentanwälte PartGmbB

(57) **Zusammenfassung**

Die Erfindung betrifft einen Dokumentenscanner (10), umfassend ein Gehäuse (12), in dem eine Erfassungseinrichtung (14) für Dokumente angeordnet ist. Das Gehäuse (12) hat eine Scanöffnung (18) für den Erfassungsbereich (16) der Erfassungseinrichtung (14), wobei die Scanöffnung (18) von einem Aufnahmebereich (20) des Gehäuses (12) für eine transparente Auflageplatte (22) umgeben ist. Die Auflageplatte (22) deckt die Scanöffnung (18) ab und dient zur Auflage eines zu scannenden Dokuments. Erfindungsgemäß ist zwischen der Auflageplatte (22) und dem Aufnahmebereich (20) eine die Scanöffnung (18) umgebende Polymerdichtung (26) angeordnet, wodurch der Dokumentenscanner (10) gemäß Schutzklasse IP54 staub -und spritzwassergeschützt und für somit die Anordnung im Außenbereich geeignet ist.

## Beschreibung

Die vorliegende Erfindung betrifft einen Dokumentenscanner, wie er an sicherheitsrelevanten Orten wie Ämtern oder Flughäfen eingesetzt wird, um die Identität von Personen zu erfassen.

Ein derartiger Dokumentenscanner enthält regelmäßig ein Gehäuse, in dem eine Erfassungseinrichtung für Dokumente angeordnet ist, beispielsweise einen Laserscanner. Das Gehäuse hat weiterhin eine Scanöffnung für den Durchtritt des Erfassungsbereichs der Erfassungseinrichtung, wobei die Scanöffnung von einem Aufnahmebereich für eine transparente Auflageplatte umgeben ist. Die transparente Auflageplatte ist ausgebildet, die Scanöffnung abzudecken und den Durchtritt des Erfassungsbereichs zu erlauben. Die Auflageplatte dient zudem zur Auf- oder Anlage eines zu scannenden Dokuments.

Ein Dokumentenscanner dieser gattungsgemäßen Art soll auch im Außenbereich einsetzbar sein, wo er der Witterung ausgesetzt ist.

### Darstellung der Erfindung

Es ist daher Aufgabe, einen Dokumentenscanner der oben genannten Art derart weiterzubilden, dass er für eine Anwendung im Außenbereich geeignet ist. Diese Aufgabe wird gelöst durch einen Dokumentenscanner mit den Merkmalen des Anspruchs 1. Weitere vorteilhafte Aspekte, Details und Ausgestaltungen der Erfindung ergeben sich aus den abhängigen Ansprüchen, der Beschreibung sowie den Zeichnungen.

Erfindungsgemäß ist zwischen der Auflageplatte und dem Aufnahmebereich des Gehäuses eine die Scanöffnung umgebende Polymerdichtung angeordnet. Auf diese Weise wird verhindert, dass Staub oder Feuchtigkeit durch die Scanöffnung in den Innenraum des Gehäuses gelangt und dort eventuell die Erfassungsleistung der Erfassungseinrichtung beeinträchtigt. Durch die erfindungsgemäße Ausbildung des Dokumentenscanners wird somit eine volle Betriebstauglichkeit nach Schutzart IP54 erreicht, womit dieser insbesondere für den Einsatz im Außenbereich geeignet ist.

Vorzugsweise ist die Polymerdichtung in einer in dem Aufnahmebereich des Gehäuses angeordneten Nut angeordnet, womit sie in ihrer Lage definiert in dem Aufnahmebereich gehalten ist.

Vorzugsweise steht die Polymerdichtung ein wenig über die Nut hervor. Somit drückt dann die Auflageplatte auf den überstehenden Bereich der Polymerdichtung, so dass diese leicht deformiert wird und dabei eine sichere Abdichtung zwischen der Nut im Aufnahmebereich des Gehäuses und Auflageplatte realisiert wird.

Vorzugsweise ist das Lesegerät durch einen Laserscanner gebildet, der sich für die Dokumentenerfassung als sehr zuverlässig und betriebssicher erwiesen hat. Es ist jedoch möglich, auch andere optische Erfassungseinrichtungen zu verwenden, die im Stand der Technik geläufig sind.

In einer vorteilhaften Weiterbildung der Erfindung ist die Polymerdichtung als ein die Scanöffnung vollständig umgebender geschlossener Dichtring ausgebildet. Dadurch, dass die Polymerdichtung als geschlossener Dichtring ausgebildet ist, gibt es nirgendwo einen Spalt, durch den Wasser durch die Scanöffnung in den Innenraum des Gehäuses eindringen könnte. Prinzipiell ist es möglich, eine längliche Polymerdichtung zu verwenden und diese in Art eines Ringes zusammenzulegen, wobei dort immer das Problem besteht, dass an den aneinanderstoßenden oder sich überlappenden Enden der Polymerdichtung eine mögliche Durchtrittsstelle für Wasser oder Dreck gebildet wird. Dies wird bei einem geschlossenen Dichtring wirkungsvoll vermieden.

In einer vorteilhaften Weiterbildung der Erfindung ist die Polymerdichtung eine Silikon-Kautschuk-Dichtung. Eine Silikon-Kautschuk-Dichtung ist zum einen hoch deformierbar und hat zum anderen eine sehr gute Abdichtungsqualität, womit sich dieser Materialtyp hervorragend für die Abdichtung zwischen der Auflageplatte und dem Aufnahmebereich des Gehäuses eignet.

Vorzugsweise hat die Polymerdichtung eine Shore-Härte zwischen 40 und 70, womit sie bei einer Montage der Auflageplatte auf dem Aufnahmebereich des Gehäuses weich genug ist, um deformiert zu werden und damit durch die beim Deformieren entstehende Federkraft eine sehr gute Abdichtung zwischen der Auflageplatte und dem Aufnahmebereich des Gehäuses zu erwirken.

Prinzipiell wäre es möglich, eine Polymerdichtung mit beliebigen Querschnitten zu verwenden. Vorzugsweise ist die Polymerdichtung jedoch als O-Ringdichtung ausgebildet, was den Vorteil hat, dass ein falscher oder verkanteter Einbau, wie es zum Beispiel bei Polymerdichtungen mit rechteckiger Querschnittsfläche möglich ist, ausgeschlossen wird, so dass die Polymerdichtung bei ihrer Anordnung um die Scanöffnung im Aufnahmebereich des Gehäuses, insbesondere bei der definierten Anordnung in einer Nut, immer richtig platziert ist.

In einer vorteilhaften Weiterbildung der Erfindung ist die Aufnahmeplatte derart an dem Gehäuse montiert, dass sie auf die im Aufnahmebereich des Gehäuses gehaltene Polymerdichtung drückt und diese dabei leicht verformt, wobei dies, wie oben bereits ausgeführt, zu einer Andruckkraft der Polymerdichtung zwischen der Aufnahmeplatte und dem Aufnahmebereich des Gehäuses führt, was eine zuverlässige Abdichtung dieses Zwischenraums sicherstellt.

Eine vorteilhafte Weiterbildung der Erfindung ist derart ausgebildet, dass eine erste Seitenkante der Auflageplatte durch eine stufenartige Kantenaufnahme am Gehäuse aufgenommen und dadurch zum Aufnahmebereich hin festgelegt ist. Dies hat den Vorteil, dass die Auflageplatte durch Anlegen mit ihrer ersten Seitenkante an die Kantenaufnahme formschlüssig gegen den Aufnahmebereich gesichert ist, so dass durch Festlegung der zweiten Seitenkante der Auflageplatte, welche der ersten Seitenkante abgewandt ist, eine sichere Montage der Auflageplatte auf dem Aufnahmebereich ermöglicht wird, die zudem es erlaubt, dass durch die Auflageplatte ein Druck auf die darunter befindliche Polymerdichtung ausgeübt wird.

Vorzugsweise ist die Kantenaufnahme durch eine von dem Aufnahmebereich in einem spitzen Winkel, insbesondere in einem Winkel zwischen 30 und 60 Grad, vorzugsweise in einem Winkel von näherungsweise 45 Grad, abstehende Stufe gebildet, und die erste Seitenkante der Auflageplatte ist zur Ebene der Auflageplatte in einem gleichermaßen spitzen Winkel geneigt, so dass bei einer auf dem Aufnahmebereich aufliegenden Auflageplatte die Kantenaufnahme und die erste Seitenkante der Auflageplatte zueinander fluchten. Auf diese Weise wird durch die Kantenaufnahme in Zusammenwirken mit der fluchtenden ersten Seitenkante der Auflageplatte die Auflageplatte gegen den Aufnahmebereich und damit gegen die Polymerdichtung gedrückt, was zu einer guten Abdichtung zwischen Auflageplatte und Gehäuse führt. Es ist aber alternativ auch möglich, in der ersten Seitenkante der Auflageplatte ein Profil, z.B. eine Stufe auszubilden, die mit einem korrespondierenden Profil der Kantenaufnahme fluchtet. Hierdurch kann die Auflageplatte, insbesondere durch eine Schwenkbewegung, in einen Formschluss mit der Kantenaufnahme gebracht werden, womit die Auflageplatte an ihrer ersten Seitenkante dann gegen den Aufnahmebereich des Gehäuses festgelegt wird.

In diesem Fall ist vorzugsweise die Auflageplatte an ihrer der ersten Seitenkante abgewandten zweiten Seitenkante durch ein Dokumenten-Anlageelement an dem Aufnahmebereich des Gehäuses festgelegt. Dieses Dokumenten-Anlageelement drückt dann die Auflageplatte an ihrer zweiten Seitenkante nach unten auf den Aufnahmebereich und legt diese an dem Gehäuse fest, womit auch die darunterliegende Polymerdichtung fest zwischen der Auflageplatte und dem Aufnahmebereich des Gehäuses eingepasst ist. Das Dokumenten-Anlageelement kann beispielsweise mit Schrauben oder in einer sonstigen an sich bekannten Art an dem Gehäuse festgelegt werden. Das Dokumenten-Anlageelement hat hierfür einen die Auflageplatte übergreifenden Andruckbereich, welcher die Auflageplatte gegen den Aufnahmebereich des Gehäuses drückt.

Der Aufnahmebereich des Gehäuses ist vorzugsweise gegen die Oberfläche an der Oberseite des Gehäuses etwas zurückversetzt, insbesondere in etwa um die Stärke der Auflageplatte, was zur Folge hat, dass die Oberfläche der Auflageplatte bündig mit der Oberfläche des Gehäuses an dessen Oberseite fluchtet. Auch dies wirkt einem Schmutzeintrag entgegen und erleichtert die Reinigung des Dokumentenscanners.

### Kurze Beschreibung der Zeichnungen

Die Erfindung wird nachfolgend beispielsweise anhand der schematischen Zeichnung beschrieben. In dieser zeigen:
- Fig. 1: eine schematische Seitenansicht eines Dokumentenscanners mit separat dargestellter Auflageplatte, Polymerdichtung und Dokumenten-Anlageelement,
- Fig. 2: eine Seitenansicht des Dokumentenscanners aus Fig. 1 in fertig montiertem Zustand,
- Fig. 3: ein Detail III aus Fig. 1,
- Fig. 4: ein Detail IV aus Fig. 2, und
- Fig. 5: eine Aufsicht V auf den montierten Dokumentenscanner aus Fig. 2.

### Wege zur Ausführung der Erfindung

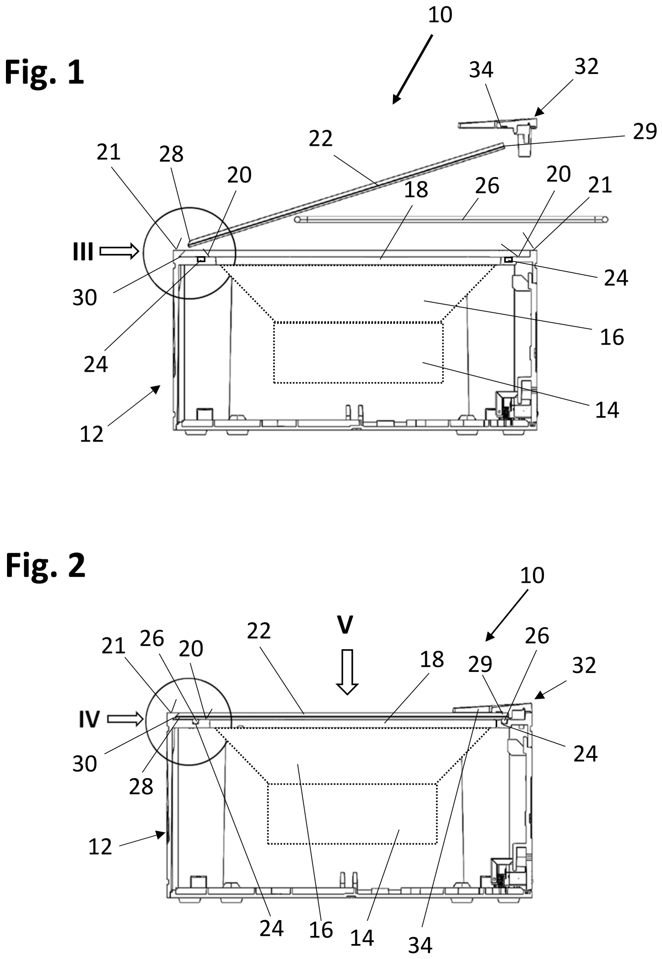

Fig. 1 zeigt einen Dokumentenscanner 10 mit einem quaderförmigen Gehäuse 12, welches eine nur schematisch dargestellte Erfassungseinrichtung 14 umschließt. Die Erfassungseinrichtung 14 hat einen nach oben auf eine Scanöffnung 18 des Gehäuses 12 gerichteten Erfassungsbereich 16. Ein gegenüber der Oberfläche 21 an der Oberseite des Gehäuses zurückversetzter Aufnahmebereich 20 umgibt die Scanöffnung 18. Der Aufnahmebereich 20 ist dafür ausgebildet ist, eine transparente Auflageplatte 22, insbesondere aus Glas, aufzunehmen.

In dem Aufnahmebereich 20 ist eine die Scanöffnung 18 umgebene Nut 24 angeordnet, welche zur Aufnahme einer geschlossenen Polymerdichtung, insbesondere einer Polymer-Ringdichtung 26 ausgebildet ist. Die Ringdichtung 26 ist aus einem weichen Polymer, insbesondere aus Silikon-Kautschuk, und ist, wie es in der Figur dargestellt wird, als O-Ringdichtung ausgebildet.

Der Versatz des Aufnahmebereichs 20 gegenüber der Oberfläche 21 ist ein klein wenig größer als die Stärke der Auflageplatte 22, so dass die in den Aufnahmebereich 20 eingesetzte Auflageplatte 22, die durch die Polymerdichtung 26 ein wenig von der Oberfläche des Aufnahmebereichs 20 weggedrückt wird, mit der Oberfläche 21 des Gehäuses 12 fluchtet.

Fig. 1 zeigt eine Art Explosionsdarstellung mit separater Polymerdichtung 26 und Auflageplatte 22. Die Auflageplatte 22 ist in Fig. 1 beim Einsetzen in den Aufnahmebereich 20 des Gehäuses 12 dargestellt. Die Auflageplatte 22 hat eine erste Seitenkante 28, die in einem spitzen Winkel zur unteren Fläche der Auflageplatte 22 verläuft. An dem Gehäuse 12 ist angrenzend an den Aufnahmebereich 20 eine Kantenaufnahme 30 ausgebildet, die als in einem spitzen Winkel zum Aufnahmebereich 20 des Gehäuses angeordnete Stufe ausgebildet ist. In diese spitzwinklige Kantenaufnahme 30 wird die Auflageplatte 22 mit ihrer ebenfalls spitzwinkligen ersten Seitenkante 28 eingesetzt. Zwischen der Auflageplatte 22 und dem Aufnahmebereich 20 des Gehäuses 12 wird die Polymer-Ringdichtung 26 in die Nut 24 eingelegt, wobei diese mit ihrer Oberseite etwas aus der Nut 24 hinausragt. Nach dem Einsetzen der ersten Seitenkante 28 in die Kantenaufnahme 30 des Gehäuses 12 wird die Auflageplatte nach unten auf den Aufnahmebereich 20 gedrückt und durch ein Dokumenten-Anlageelement 32 festgelegt, welches an dem Gehäuse 12 montiert, insbesondere mit dem Gehäuse verschraubt, wird. Das Dokumenten-Anlageelement 32 hat einen die Auflageplatte übergreifenden Andruckbereich 34, der die Auflageplatte 22 bei montiertem Dokumenten-Anlageelement 32 auf den Aufnahmebereich 20 drückt und dort festlegt.

Auf diese Weise erhält man bei fertiger Montage den in Fig. 2 dargestellten Dokumentenscanner 10 mit montierter Auflageplatte 22 und der zwischen dem Aufnahmebereich 20 und der Auflageplatte 22 angeordneten Polymer-Ringdichtung 26. Eine derartige Anordnung ist sehr gut gegen Staub und Feuchtigkeit geschützt und damit auch zur Anwendung im Außenbereich geeignet. Sie entspricht den Anforderungen der IP54-Schutzart und kann damit als betriebssicher im Außenbereich betrachtet werden.

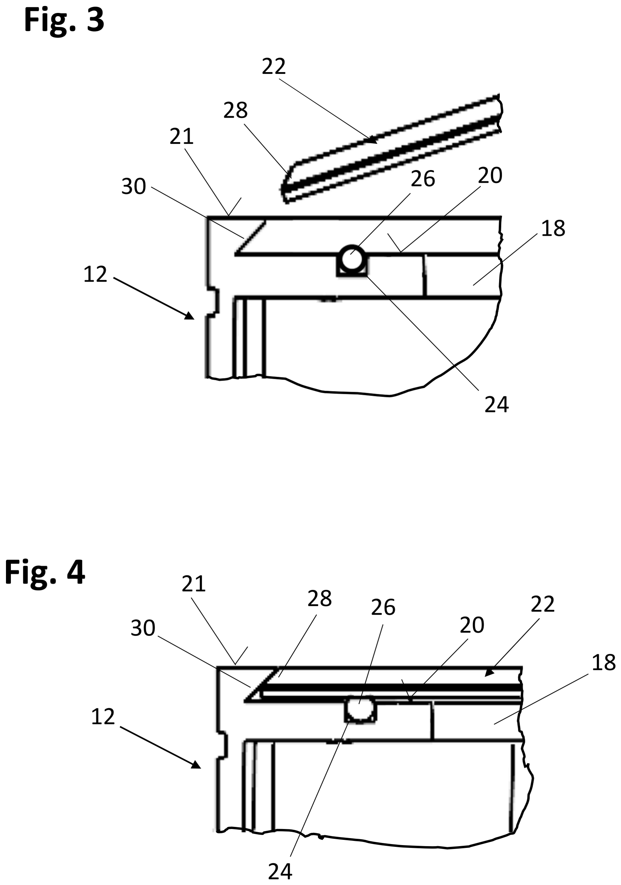

Fig. 3 zeigt ein Detail III aus Fig. 1, welches in vergrößerter Darstellung die erste Seitenkante 28 der Auflageplatte 22 beim Einsetzen in die Kantenaufnahme 30 des Gehäuses 12 zeigt. Die Figur verdeutlicht auch, wie die O-Ringdichtung 26 etwas aus ihrer Nut 24 nach oben aus dem Aufnahmebereich 20 hervorsteht. Die bewirkt, wie das in Fig. 4 als Detail IV aus Fig. 2 gezeigt ist, dass die Ringdichtung 26 nach der Montage der Auflageplatte 22 etwas durch diese zusammengedrückt und deformiert wird, wobei zwischen der Auflageplatte 22 und der Nut 24 eine Druckkraft durch die deformierte Polymerdichtung 26 ausgeübt wird, die zu einer absoluten Dichtigkeit führt. Damit ist die Scanöffnung 18 wirkungsvoll gegen den Eintritt von Staub und Spritzwasser geschützt. Die Figur zeigt auch sehr gut, wie die Auflageplatte 22 an ihrer ersten Seitenkante 28 durch die Kantenaufnahme 30 an dem Aufnahmebereich 20 des Gehäuses festgelegt wird, die in einem spitzen Winkel zum Aufnahmebereich verläuft und damit die Auflageplatte 22 formschlüssig gegen den Aufnahmebereich 20 übergreift.

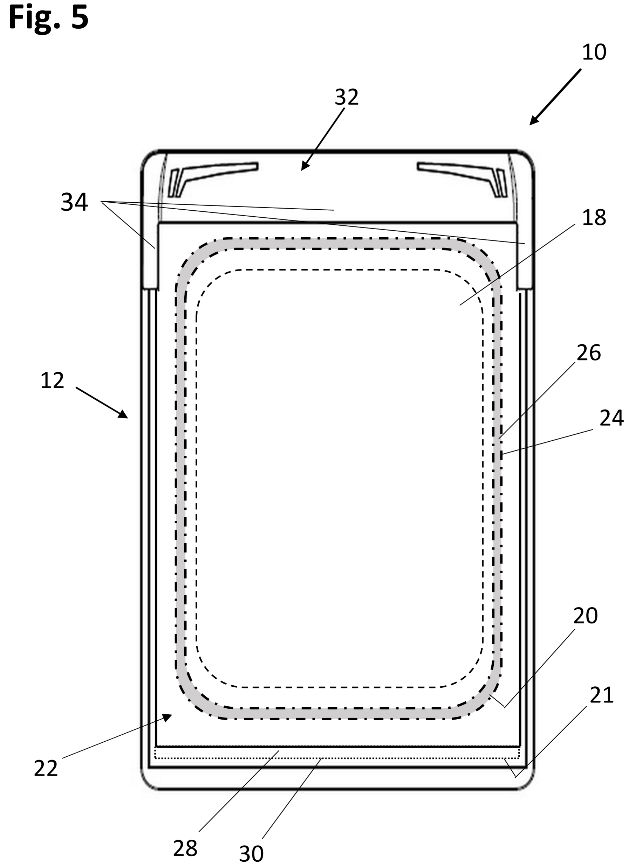

Schließlich zeigt Fig. 5 eine Aufsicht V aus Fig. 2. Dort ist sehr gut zu sehen die Scanöffnung 18, der die Scanöffnung 18 umgebende Aufnahmebereich 20, die in dem Aufnahmebereich 20 angeordnete Nut 24 und die darin aufgenommene geschlossene Ringdichtung 26, welche durch die Auflageplatte 22 gegen den Aufnahmebereich gedrückt wird. An ihrer ersten Seitenkante 28 ist die Auflageplatte 22 durch die Kantenaufnahme 30 auf den Aufnahmebereich 20 und damit auf die Ringdichtung 26 gedrückt. An ihrer zweiten Seitenkante 29 ist die Auflageplatte 22 durch das Dokumenten-Anlageelement 32 übergriffen und damit fest gegen den Aufnahmebereich 20 gedrückt, so dass die gesamte Auflageplatte 22 sicher gegen den Aufnahmebereich 20 des Gehäuses 12 montiert ist. Das Dokumenten-Anlageelement 32 dient zudem dazu, zu scannende Dokumente dort anzulegen, so dass die zu erfassenden Informationen an einer definierten Stelle in der Scanöffnung angeordnet und damit zuverlässig von der Erfassungseinrichtung 14 durch die Scanöffnung 18 und die transparente Auflageplatte 22 hindurch erfasst werden.

Die Erfindung ist nicht auf das dargestellte Ausführungsbeispiel beschränkt, sondern kann stattdessen innerhalb des Schutzbereichs der beiliegenden Ansprüche variiert werden.

### Bezugszeichenliste

- 10: Dokumentenscanner
- 12: Gehäuse des Dokumentenscanners
- 14: Erfassungseinrichtung (nur schematisch angedeutet), insbesondere Laserscanner
- 16: Erfassungsbereich der Erfassungseinrichtung
- 18: Scanöffnung im Gehäuse
- 20: Gegenüber der Oberfläche des Gehäuses zurück versetzter Aufnahmebereich für die Auflageplatte
- 21: Oberfläche des Gehäuses an dessen Oberseite
- 22: transparente Auflageplatte, insbesondere aus Glas zur Abdeckung der Scanöffnung und zum Auf- bzw. Anlegen von zu scannenden Dokumenten
- 24: die Scanöffnung umgebende Nut im Aufnahmebereich des Gehäuses
- 26: in der Nut angeordnete ringförmig geschlossene O-Ringdichtung
- 28: zur Unterseite der Auflageplatte in einem spitzen Winkel geneigte erste Seitenkante der Auflageplatte
- 29: der ersten Seitenkante abgewandte zweite Seitenkante der Auflageplatte
- 30: in einem spitzen Winkel zum Aufnahmebereich geneigte Aufnahmekante des Gehäuses für die erste Seitenkante der Auflageplatte
- 32: Dokumenten-Anlageelement zum Festlegen der zweiten Seitenkante der Auflageplatte auf dem Aufnahmebereich
- 34: Andruckbereich des Dokumenten-Anlageelements zum Festlegen der Auflageplatte auf den Aufnahmebereich

## Patentansprüche

1. Dokumentenscanner (10), umfassend ein Gehäuse (12), in dem eine Erfassungseinrichtung (14) für Dokumente angeordnet ist, welches Gehäuse (12) weiterhin eine Scanöffnung (18) für einen Erfassungsbereich (16) der Erfassungseinrichtung (14) aufweist, wobei die Scanöffnung (18) von einem Aufnahmebereich (20) des Gehäuses (12) für eine transparente Auflageplatte (22) umgeben ist, wobei die Auflageplatte (22) die Scanöffnung (18) abdeckt und zur Aufund/oder Anlage eines zu scannenden Dokuments dient, **dadurch gekennzeichnet, dass** zwischen der Auflageplatte (22) und dem Aufnahmebereich (20) des Gehäuses (12) eine die Scanöffnung (18) umgebende Polymerdichtung (26) angeordnet ist.

2. Dokumentenscanner (10) nach Anspruch 1, **dadurch gekennzeichnet, dass** die Polymerdichtung (26) in einer in dem Aufnahmebereich (20) des Gehäuses (12) angeordneten Nut (24) angeordnet ist.

3. Dokumentenscanner (10) nach Anspruch 2, **dadurch gekennzeichnet, dass** die Polymerdichtung (26) etwas über die Nut (24) nach oben hervorsteht.

4. Dokumentenscanner (10) nach einem der vorhergehenden Ansprüche, **dadurch gekennzeichnet, dass** die Erfassungseinrichtung (14) durch einen Laserscanner gebildet ist.

5. Dokumentenscanner (10) nach einem der vorhergehenden Ansprüche, **dadurch gekennzeichnet, dass** die Polymerdichtung (26) als ein die Scanöffnung (18) vollständig umgebender geschlossener Dichtring ausgebildet ist.

6. Dokumentenscanner (10) nach einem der vorhergehenden Ansprüche, **dadurch gekennzeichnet, dass** die Polymerdichtung (26) eine Silikon-Kautschuk (VMQ) Dichtung ist.

7. Dokumentenscanner (10) nach einem der vorhergehenden Ansprüche, **dadurch gekennzeichnet, dass** die Polymerdichtung (26) eine Shore-Härte zwischen 40 - 70 hat.

8. Dokumentenscanner (10) nach einem der vorhergehenden Ansprüche, **dadurch gekennzeichnet, dass** die Polymerdichtung (26) als O-Ringdichtung ausgebildet ist.

9. Dokumentenscanner (10) nach einem der vorhergehenden Ansprüche, **dadurch gekennzeichnet, dass** die Auflageplatte (22) derart an dem Gehäuse (12) montiert ist, dass sie auf die im Aufnahmebereich (20) gehaltene Polymerdichtung (26) drückt und diese dabei verformt.

10. Dokumentenscanner (10) nach einem der vorhergehenden Ansprüche, **dadurch gekennzeichnet, dass** eine erste Seitenkante (28) der Auflageplatte (22) durch eine stufenartige Kantenaufnahme (30) am Gehäuse (12) aufgenommen und am Aufnahmebereich (20) festgelegt ist.

11. Dokumentenscanner (10) nach Anspruch 10, **dadurch gekennzeichnet, dass** die Kantenaufnahme (30) durch eine von dem Aufnahmebereich (20) in einem spitzen Winkel, insbesondere in einem Winkel zwischen 30 und 60 Grad, abstehende Stufe gebildet ist, und dass die erste Seitenkante (28) zur Unterseite der Auflageplatte (22) in einem gleichermaßen spitzen Winkel geneigt ist, so dass bei auf dem Aufnahmebereich (20) aufliegender Auflageplatte (22) die Kantenaufnahme (30) und die erste Seitenkante (28) der Auflageplatte (22) zueinander fluchten.

12. Dokumentenscanner (10) nach Anspruch 11, **dadurch gekennzeichnet, dass** der Winkel 45 Grad beträgt.

13. Dokumentenscanner (10) nach einem der Ansprüche 10 bis 12, **dadurch gekennzeichnet, dass** die Auflageplatte (22) an ihrer der ersten Seitenkante (28) abgewandten zweiten Seitenkante (29) durch ein Dokumenten-Anlageelement (32) an dem Aufnahmebereich (20) des Gehäuses (12) festgelegt ist.

14. Dokumentenscanner (10) nach Anspruch 13, **dadurch gekennzeichnet, dass** das Dokumenten-Anlageelement (32) ein die Auflageplatte (22) übergreifenden Andruckbereich (34) für die Auflageplatte (22) aufweist, welches die Auflageplatte (22) zumindest an ihrer zweiten Seitenkante (29) gegen den Aufnahmebereich (20) drückt.

15. Dokumentenscanner (10) nach einem der vorhergehenden Ansprüche, **dadurch gekennzeichnet, dass** der Aufnahmebereich (20) gegenüber der Oberfläche (21) der Oberseite des Gehäuses (12), vorzugsweise in etwa um die Stärke der Auflageplatte (22), zurückversetzt ist.
